# FASCICULE DE BREVET EUROPEEN

(11) **EP 3 117 113 B1**
(45) Date de publication et mention de la délivrance du brevet: **15.08.2018**
(21) Numéro de dépôt: 15712541.0
(22) Date de dépôt: 10.03.2015
(51) Int. Cl.: F16B 39/284

(54) **INSERT FILETE**
GEWINDEEINSATZ
THREADED INSERT

(30) Priorité: 11.03.2014 FR 1452018
(43) Date de publication de la demande: 18.01.2017
(73) Titulaire: Lisi Aerospace, 75012 Paris (FR)
(72) Inventeur: PHILIPPE, Alan, F-22400 Lamballe (FR); BOLEIS, Gildas, F-22410 Lantic (FR)
(74) Mandataire: Ipside
(86) Numéro de dépôt international: PCT/EP2015/054891
(87) Numéro de publication internationale: WO 2015/135899

(56) Documents cités:
- DE-A1- 2 142 954
- FR-A2- 2 407 385
- US-A- 2 444 847
- US-A- 2 750 979
- US-A- 3 383 975

## Description

La présente invention se rapporte à un insert fileté extérieurement, comportant un moyen de freinage interdisant le desserrage indésirable de l'insert une fois celui-ci installé. Ces inserts sont utilisés essentiellement pour le positionnement axial et le maintien en position de bagues de roulements. Le document DE 2 142 954 A montre par exemple un tel insert comprenant les caractéristiques du préambule de la revendication 1.

Il est connu de la norme européenne EN4399:2008 une bague métallique comportant un corps cylindrique fileté extérieurement, comprenant à l'une des extrémités de multiples languettes flexibles, également filetées sur leur pourtour extérieur, et pliées vers l'extérieur pour assurer une fonction de freinage. Ce type de bague ne permet cependant pas d'assembler des roulements de diamètre supérieur à celui de la bague.

Il est connu du brevet US 3,383,975 une bague métallique comportant un corps cylindrique comprenant à l'une des extrémités de multiples languettes flexibles filetées sur leur pourtour extérieur. Une fixation avec une extrémité conique et l'insert sont insérés dans un trou taraudé ménagé dans une structure. L'insert est élargi par une traction de l'extrémité conique de la fixation de sorte à bloquer l'insert dans la structure.

Il est également connu un insert métallique comportant un corps cylindrique fileté extérieurement, dont l'une des extrémités comprend une collerette élargie et l'autre extrémité comprend une bague de freinage en polyimide sertie sur le pourtour extérieur du corps. Lorsque l'insert est installé dans un taraudage réalisé dans une structure, la bague entre en interférence avec le sommet du filet du taraudage et assure le freinage de l'insert. Une telle bague ne peut cependant être utilisée à haute température, ce qui limite les applications d'un tel insert. Une telle bague augmente également l'encombrement axial de l'insert. De plus, la structure doit comprendre une forme spéciale qui permet l'insertion de l'insert en retardant le contact avec la bague polyimide.

L'invention a pour but de fournir un insert ne présentant pas les inconvénients des inserts connus. Ainsi, l'invention se rapporte à un insert apte à être inséré dans un élément comportant un taraudage, l'insert comportant une première extrémité définissant une ouverture circulaire, un corps cylindrique présentant une paroi intérieure et une paroi extérieure, une deuxième extrémité définissant une ouverture et formant une collerette élargie. Le corps comporte une première portion, adjacente à la première extrémité, munie d'un filetage extérieur et une deuxième portion, adjacente à la première portion, comportant au moins deux découpes définissant au moins deux languettes flexibles s'étendant axialement, chaque languette présentant un filetage extérieur et formant un angle avec un axe de l'insert vers l'extérieur du corps.

Le moyen de freinage disposé en milieu de corps permet de pouvoir pré-assembler l'insert jusqu'à la deuxième portion dont la fonction première est le freinage, sans nécessiter de géométrie antagoniste particulière dans la structure.

Les découpes des languettes permettent d'adapter la proportion de surface en contact avec le taraudage antagoniste en fonction du niveau de performance attendu.

Le dispositif selon l'invention présente préférentiellement au moins une des caractéristiques ci-dessous, prises isolément ou en combinaison:
- les filetages de la première portion et des languettes sont de pas identiques,
- les filetages de la première portion et des languettes sont de pas différents,
- la deuxième portion comporte entre les découpes des parois de diamètre extérieur inférieur à un diamètre de fond de filet du filetage de la première portion,
- l'insert comporte en outre une troisième portion disposée entre la collerette et la deuxième portion, présentant un diamètre extérieur supérieur à un diamètre de sommet de filet du filetage de la première portion et inférieur à un diamètre extérieur de la collerette,
- la collerette comporte un moyen d'entraînement en rotation de l'insert,
- la forme de l'ouverture de la deuxième extrémité constitue le moyen d'entraînement en rotation de l'insert,
- la forme du pourtour de la collerette constitue le moyen d'entraînement en rotation de l'insert,
- le moyen d'entraînement est constitué par au moins deux perçages réalisés dans le plan de la collerette,
- les découpes sont en forme de U ou de V.

L'invention sera mieux comprise à la lecture de la description qui suit et à l'examen des figures qui l'accompagnent. Celles-ci sont données à titre indicatif et nullement limitatif de l'invention. Les figures montrent :
- Figure 1 : une vue en perspective d'un mode de réalisation d'un insert selon un mode de réalisation de l'invention,
- Figure 2 : une vue en coupe selon l'axe de révolution de l'insert de la figure 1,
- Figure 2A : un détail magnifié d'une languette de la figure 2,
- Figure 3 : une vue en coupe de l'insert des figures 1 et 2 avant installation dans une structure S,
- Figure 4 : une vue en coupe de l'insert des figures 1 et 2 installé dans une structure S.

Pour faciliter la lecture des figures, seuls les éléments nécessaires à la compréhension de l'invention ont été représentés. Les mêmes éléments portent les mêmes références d'une figure à l'autre.

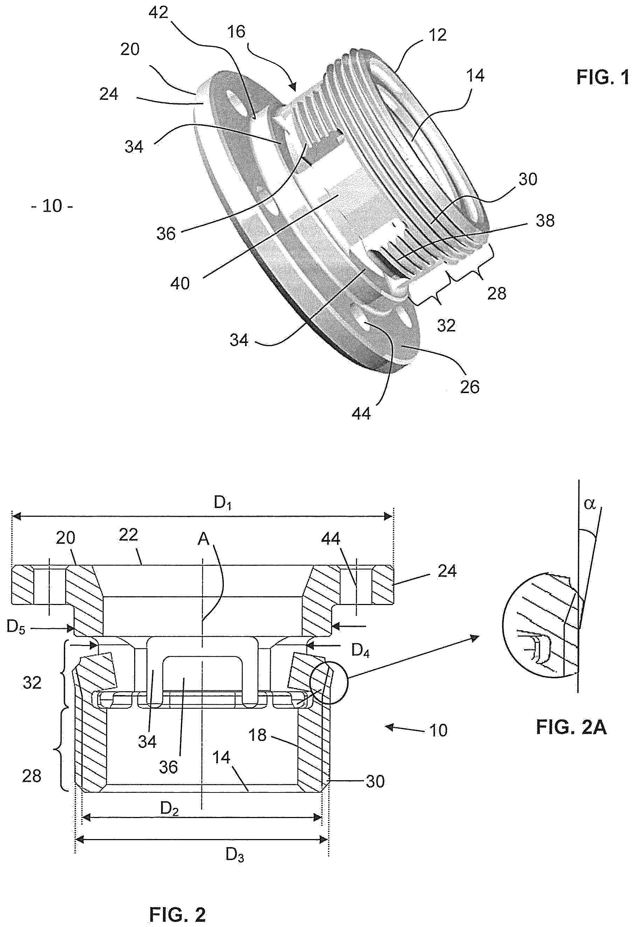

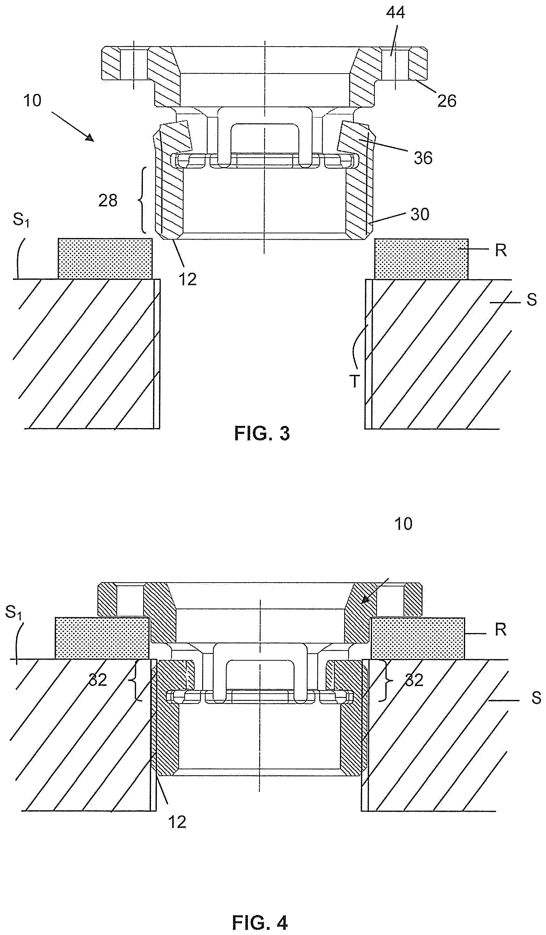

Les figures 1 et 2 représentent un insert 10 destiné à être inséré dans une structure S comportant un perçage taraudé T (figure 3). L'insert 10 possède un axe de révolution A et comporte une première extrémité 12 définissant une ouverture circulaire 14, un corps cylindrique 16 présentant une paroi intérieure 18 et une paroi extérieure, ainsi qu'une deuxième extrémité 20 définissant une ouverture circulaire 22. En variante, l'ouverture 22 peut être non circulaire, par exemple pour réaliser la fonction d'entraînement en rotation de l'insert. Le corps de l'insert est destiné à recevoir un arbre traversant de part en part l'insert 10. La paroi intérieure 18 peut être cylindrique, ou peut comporter un moyen de détrompage de l'arbre, complémentaire de la forme de l'arbre. La deuxième extrémité forme une collerette élargie 24 de diamètre extérieur D₁, dont une surface 26 disposée vers la première extrémité 12, est destinée à reposer contre un élément à assembler et maintenir sur la structure, par exemple une bague de roulements disposée sur l'arbre. Le diamètre extérieur D₁ de la collerette est supérieur à n'importe quel autre diamètre extérieur de l'insert 10.

Le corps 16 comporte une première portion 28, adjacente à la première extrémité, munie d'un filetage 30 extérieur. Ce filetage est choisi de sorte à être complémentaire au taraudage T de la structure S. Le filetage 30 a un diamètre minimal D₂ en fond de filet, et un diamètre maximal D₃ en sommet de filet. Le corps 16 comporte également une deuxième portion 32, adjacente à la première portion, comportant au moins deux découpes 34 définissant au moins deux languettes 36 flexibles s'étendant axialement. Dans ce mode de réalisation, le corps comporte quatre découpes 34 en forme de U, chaque branche du U s'étendant parallèlement à l'axe de révolution A, les branches étant reliées par une découpe perpendiculaire à l'axe de révolution. La forme des découpes 34 peut cependant varier, et former par exemple un V. Chaque languette 36 formée présente un filetage extérieur 38, de pas identique au pas du filetage 30 de la première portion 28. Chaque languette 36 est déformée plastiquement pendant la fabrication de l'insert et forme un angle α avec l'axe de révolution A, vers l'extérieur du corps (figure 2A). Par « pas identique », on entend que les filets des filetages 38 et 30 ont un même écartement.

Les languettes 36 flexibles assurent une fonction de freinage de l'insert 10 dans la structure S, assurant ainsi que l'insert de ne desserrera pas sous l'action, par exemple, de vibrations imprimées à l'arbre. Selon le diamètre de l'insert et l'effort de freinage désiré, le nombre de découpes 34 et donc de languettes 36 peut varier. L'angle α peut varier entre 30' et 45°.

Pour augmenter l'effet de freinage, le pas du filetage 38 des languettes peut varier dans la direction de l'axe A de révolution depuis la base des languettes vers la deuxième extrémité 20, comme décrit par exemple dans le brevet FR2941507, au lieu d'être identique au filetage de la première portion. Le filetage 38 des languettes peut en variante être recouvert d'un polymère frein filet du type vendu sous le nom LOCTITE™, assurant un freinage chimique.

La deuxième portion 32 comporte entre les découpes 34 des parois 40, reliant la collerette 24 à la première portion 28. Le diamètre extérieur maximal D₄ des parois 40 est inférieur au diamètre de fond de filet D₂ du filetage 30 de la première portion, afin de ne pas interférer avec les sommets de filet du taraudage T de la structure. Dans l'exemple illustré dans les figures 1 et 2, les parois 40 présentent extérieurement une surface lisse, obtenue par usinage.

L'insert 10 comporte également une troisième portion 42, disposée entre la collerette 24 et la deuxième portion 32. De forme cylindrique, elle présente un diamètre extérieur D₅ supérieur au diamètre de sommet D₃ de filet du filetage 30 de la première portion 28. Le diamètre D₅ est également inférieur au diamètre extérieur D₁ de la collerette 26. Cette troisième portion a pour fonction d'assurer le centrage de la bague de roulement R sur la structure S. Son diamètre est donc choisi de manière à correspondre au diamètre intérieur de la bague de roulement R à assembler, et sa longueur dans le sens axial est également choisie en fonction de l'épaisseur du roulement à maintenir entre la face d'appui 26 de la collerette et une face S₁ de la structure contre laquelle le roulement repose.

La collerette 24 comporte dans cet exemple six perçages 44 débouchant, régulièrement répartis dans le plan de la collerette. Ces perçages constituent un moyen d'entraînement en rotation de l'insert 10, et sont complémentaires d'un outillage comportant six pions. Les perçages 44 peuvent ne pas être débouchant, par exemple pour maintenir sous la face 26 un joint d'étanchéité à des fluides. Bien sûr, le nombre de perçages et leur forme peuvent varier de l'exemple représenté dans les figures.

En variante, ces moyens d'entraînement 44 peuvent être constitués par la forme extérieure du pourtour de la collerette, par exemple par un hexagone ou par douze dents. Celle-ci présentera alors, en vue de dessus, une forme polygonale ou multi lobée et non plus cylindrique. Comme expliqué précédemment, l'ouverture 22 de la deuxième extrémité peut également servir de moyen d'entraînement au moyen d'une forme adaptée dans laquelle vient s'insérer une clé, par exemple un carré ou une clé Allen.

L'insert 10 peut être réalisé dans un matériau métallique, ce qui permet de l'utiliser à des hautes températures, ou dans un matériau polymère - tel que le PEEK - lorsque la température le permet et qu'un allègement de l'assemblage est souhaité.

Lorsque l'insert 10 est en matériau métallique, il est revêtu de manière connue par un revêtement métallique de type argentage ou Zinc-Nickel, ou encore par un revêtement polymère à pigment d'aluminium de type HI-KOTE™ - fourni par la société HI-SHEAR Corporation - afin de lubrifier l'insert et de réaliser une protection contre la corrosion galvanique. Un lubrifiant liquide ou de type graisse peut être appliqué en deuxième couche sur l'ensemble du corps 16 intérieur et / ou extérieur.

Les figures 3 et 4 illustrent le procédé d'installation de l'insert 10 dans une structure S comportant un perçage taraudé T. Le corps 16 de l'insert 10 est disposé au travers d'une bague de roulement R de sorte que la première extrémité 12 entre en premier dans le taraudage T, et que le roulement R est pris en sandwich entre la face 26 de la collerette et une face S₁ de la structure. Au moyen d'un outillage comportant six pions traversant les six perçages 44 de la collerette, le filetage 30 de la première portion 28 est installé sans effort dans le taraudage T de la structure sur toute la distance axiale de la première portion. Lorsque les languettes 36 entrent en contact avec le taraudage T, les filets du filetage 38 entrent en interférence - plus ou moins prononcée selon l'angle α de pliage - avec le filet antagoniste du taraudage T. Le couple d'installation augmente alors. L'angle α permet de réaliser un appui flanc de filet 38 extérieur sur le flanc de filet T intérieur, ce qui permet d'ajuster le couple de freinage résultant. Les languettes 36 sont repoussées vers l'intérieur de l'insert 10 au fur et à mesure que l'insert 10 est vissé dans la structure S, jusqu'à ce que l'angle α formé avec l'axe de révolution devienne nul, comme cela est visible en figure 4. La déformation plastique des languettes 36 dans la deuxième portion 32 a pour effet d'opposer un effort constant normal à la structure, assurant la fonction de freinage de l'insert.

L'insert 10 est ensuite vissé jusqu'à ce que la face d'appui 26 entre en contact avec le roulement R. Le roulement R est fermement maintenu assemblé dans la structure sans risque de desserrage de l'insert 10, et un arbre (non représenté) peut être introduit au travers de l'insert 10, du roulement R et de la structure S.

## Revendications

1. Insert (10) disposé selon un axe (A), ledit insert comportant une première extrémité (12) définissant une ouverture circulaire (14), un corps cylindrique (16) présentant une paroi intérieure (18) et une paroi extérieure, une deuxième extrémité (20) définissant une ouverture (22) et formant une collerette élargie (24), **caractérisé en ce que** le corps comporte une première portion (28), adjacente à la première extrémité, munie d'un filetage (30) extérieur et une deuxième portion (32), adjacente à la première portion, comportant au moins deux découpes (34) définissant au moins deux languettes (36) flexibles s'étendant axialement, chaque languette présentant un filetage extérieur (38) et formant un angle (α) avec l'axe vers l'extérieur du corps, la deuxième portion (32) comportant en outre entre les au moins deux découpes (34) des parois (40) reliant la collerette (24) à la première portion (28).

2. Insert selon la revendication 1 dans lequel les filetages (30, 38) de la première portion (28) et des languettes (36) sont de pas identiques.

3. Insert selon la revendication 1 dans lequel les filetages (30, 38) de la première portion (28) et des languettes (36) sont de pas différents.

4. Insert selon la revendication 1, dans lequel les parois (40) présentent un diamètre extérieur (D₄) inférieur à un diamètre de fond de filet (D₂) du filetage (30) de la première portion (28).

5. Insert selon la revendication 1, comportant en outre une troisième portion (42), disposée entre la collerette (24) et la deuxième portion (32), présentant un diamètre extérieur (D₅) supérieur à un diamètre de sommet (D₃) de filet du filetage (30) de la première portion (28) et inférieur à un diamètre extérieur (D₁) de la collerette (24).

6. Insert selon la revendication 1, dans lequel la collerette (24) comporte un moyen d'entraînement en rotation (44) de l'insert (10).

7. Insert selon la revendication 6, dans lequel la forme de l'ouverture (22) de la deuxième extrémité constitue le moyen d'entraînement en rotation de l'insert.

8. Insert selon la revendication 6, dans lequel la forme du pourtour de la collerette (24) constitue le moyen d'entraînement en rotation de l'insert.

9. Insert selon la revendication 6, dans lequel le moyen d'entraînement est constitué par au moins deux perçages (44) réalisés dans le plan de la collerette (24).

10. Insert selon la revendication 1, dans lequel les découpes (34) sont en forme de U ou de V.

## Patentansprüche

1. Einsatz (10), der entlang einer Achse (A) angeordnet ist, wobei der Einsatz ein erstes Ende (12), das eine kreisförmige Öffnung (14) definiert, einen zylindrischen Körper (16), der eine Innenwand (18) und eine Außenwand darbietet, ein zweites Ende (20), das eine Öffnung (22) definiert und einen erweiterten Flansch (24) bildet, umfasst, **dadurch gekennzeichnet, dass** der Körper einen ersten Abschnitt (28) umfasst, der an das erste Ende angrenzt, der mit einem Außengewinde (30) versehen ist, und einen zweiten Abschnitt (32), der an den ersten Abschnitt angrenzt, der mindestens zwei Aussparungen (34) umfasst, die mindestens zwei sich axial erstreckende flexible Laschen (36) definieren, wobei jede Lasche ein Außengewinde (38) darbietet und einen Winkel (α) mit der Achse zur Außenseite des Körpers bildet, wobei der zweite Abschnitt (32) weiter zwischen den mindestens zwei Aussparungen (34) Wände (40) umfasst, die den Flansch (24) mit dem ersten Abschnitt (28) verbinden.

2. Einsatz nach Anspruch 1, wobei die Gewinde (30, 38) des ersten Abschnitts (28) und der Laschen (36) die gleiche Steigung aufweisen.

3. Einsatz nach Anspruch 1, wobei die Gewinde (30, 38) des ersten Abschnitts (28) und der Laschen (36) unterschiedliche Steigungen aufweisen.

4. Einsatz nach Anspruch 1, wobei die Wände (40) einen Außendurchmesser (D₄) darbieten, der kleiner ist als ein Gewindefußdurchmesser (D₂) des Gewindes (30) des ersten Abschnitts (28).

5. Einsatz nach Anspruch 1, der weiter einen dritten Abschnitt (42) umfasst, der zwischen dem Flansch (24) und dem zweiten Abschnitt (32) angeordnet ist und einen Außendurchmesser (D₅) darbietet, der größer ist als ein Gewindescheiteldurchmesser (D₃) des Gewindes (30) des ersten Abschnitts (28) und kleiner als ein Außendurchmesser (D₁) des Flansches (24).

6. Einsatz nach Anspruch 1, wobei der Flansch (24) ein Drehantriebsmittel (44) des Einsatzes (10) umfasst.

7. Einsatz nach Anspruch 6, wobei die Form der Öffnung (22) des zweiten Endes das Drehantriebsmittel des Einsatzes darstellt.

8. Einsatz nach Anspruch 6, wobei die Form des Außenumfangs des Flansches (24) das Drehantriebsmittel des Einsatzes (10) darstellt.

9. Einsatz nach Anspruch 6, wobei das Antriebsmittel durch mindestens zwei Bohrungen (44) dargestellt wird, die in der Fläche des Flansches (24) ausgeführt sind.

10. Einsatz nach Anspruch 1, wobei die Aussparungen (34) U- oder V-förmig sind.

## Claims

1. Insert (10) arranged along an axis (A), said insert comprising a first end (12) defining a circular opening (14), a cylindrical body (16) having an inner wall (18) and an outer wall, a second end (20) defining an opening (22) and forming an expanded collar (24), **characterised in that** the body comprises a first portion (28), adjacent to the first end, equipped with an outer thread (30) and a second portion (32), adjacent to the first portion, comprising at least two cuts (34) defining at least two flexible strips (36) extending axially, each strap having an outer thread (38) and forming an angle (α) with the axis towards the outside of the body, the second portion (32) further comprising between them at least two cuts (34) of the walls (40) connecting the collar (24) to the first portion (28).

2. Insert according to claim 1, wherein the threads (30, 38) of the first portion (28) and the straps (36) are of identical treads.

3. Insert according to claim 1, wherein the threads (30, 38) of the first portion (28) and the straps (36) are of different treads.

4. Insert according to claim 1, wherein the walls (40) have an outer diameter (D₄) less than a thread root diameter (D₂) of the thread (30) of the first portion (28).

5. Insert according to claim 1, further comprising a third portion (42), arranged between the collar (24) and the second portion (32), having an outer diameter (D₅) greater than a thread tip diameter (D₃) of the thread (30) of the first portion (28) and less than an outer diameter (D₁) of the collar (24).

6. Insert according to claim 1, wherein the collar (24) comprises a means for driving in rotation (44) the insert (10).

7. Insert according to claim 6, wherein the shape of the opening (22) of the second end constitutes the means for driving in rotation the insert.

8. Insert according to claim 6, wherein the shape of the perimeter of the collar (24) constitutes the means for driving in rotation the insert.

9. Insert according to claim 6, wherein the drive means is constituted by at least two bores (44) made in the plane of the collar (24).

10. Insert according to claim 1, wherein the cuts (34) are U- or V-shaped.
